# EUROPEAN PATENT APPLICATION

(11) **EP 2 388 706 A1**
(43) Date of publication of application: **23.11.2011**
(21) Application number: 10305541.4
(22) Date of filing: 21.05.2010
(51) Int. Cl.: G06F 13/16, G06F 13/28

(54) **Method and system for real-time streaming and storage**

(71) Applicant: Thomson Licensing, 92130 Issy-les-Moulineaux (FR)
(72) Inventor: Abeling, Stefan, 29690, Schwarmstedt (DE); Maas, Johann, 30853, Langenhagen (DE); Klausberger, Wolfgang, 30519, Hannover (DE); Brune, Thomas, 30449, Hannover (DE)
(74) Representative: Thies, Stephan

(57) **Abstract**

In accordance with an exemplary embodiment of the present invention, a system is provided to transfer a digital data stream. The system includes a system controller (204) equipped and configured to generate address range information, and to initiate data transfers. The system further includes an array of storage devices (236) and a plurality of bus driver units (238), each of which is connected to one or more of the storage devices (236) as connected storage devices (236), and is equipped and configured to receive from the system controller (204) ones of the address range information, and, when so initiated, to perform a transfer of a portion of the digital data stream between a network data path and the connected storage devices (236) at an address range as specified in the address range information. The system controller is configured to generate, while the bus driver units (238) are performing a first transfer of a first portion of the digital data stream using a first address range information, a second address range information. The bus driver units (236) are configured to receive the second address range information while they are performing the first transfer, and to use it for a next transfer when they have finished the first transfer and without waiting for the other bus driver units (236) to complete the first transfer.

## Description

The present invention relates to the field of real-time streaming and storage. In particular, exemplary embodiments of the present invention relate to a method and system for processing streaming audio or video data with real-time processing requirements.

Typically, hardware used to process streaming data includes a CPU, a system controller, and several bus drivers. The bus drivers may each serve one or more storage devices for recording the streaming data. When streaming audio or visual data in real-time, the capabilities to pause or repeat streams of data are not available. As such, systems that process streaming data are configured to avoid throttling, or interruption, of the data paths for the streaming data. A number of issues may arise that raise the risk of interrupting the data path for streaming data. Some techniques have been developed to avoid interruption of the data paths for streaming data.

For example, U.S. Patent Application Publication No. 20090083591, by Brune, purports to disclose a recording method for high definition streaming video data onto flash memory devices with defective pages of memory. The streaming video data is multiplexed onto a matrix of flash memory devices. A common bus is used for each row of the matrix. Streaming data that is recorded into defective memory pages is backed up with copies to an additional memory buffer.

U.S. Patent Application Publication No. 20060174032, by Brant, et al., purports to disclose a method for delivering audio-visual content for an open network built around the Ethernet protocol. To maintain performance levels required in the distribution of higher quality and resolution A/V programming content over a limited bandwidth local bus, a specialized packet processing circuit may be used. The packet processing circuit may use a unique data stream interface with the ability to filter packets. The hardware-assisted filtering may provide an advantage over software-based filtering.

International Patent Application Publication No. W02004017323, by Mochizuki, et al., purports to disclose a playback apparatus and method, capable of reading streaming data- stored in a file allocation table, abbreviated FAT herein, scheme- continuously, and without delay. A table of the addresses of the recorded data is employed to facilitate playback.

Taiwanese Patent Application Publication No. 200636746, by Wittenburg, purports to disclose a method for recording or replaying digital HDTV signals in real-time. Data blocks may be accessed from multiple memories with a common data I/O bus. A block indirection table is assigned to each memory. The block indirection table masks physical defects in NAND flash memories, and maps logical data block address values to non-defective physical block addresses.

An improved method and system for streaming data onto devices with limited processing or storage resources is desirable.

A system to transfer a digital data stream according to the invention is set forth in claim 1. The system includes a system controller equipped and configured to generate address range information, and to initiate data transfers. The system further includes an array of storage devices and a plurality of bus driver units, each of which is connected to one or more of the storage devices as connected storage devices, and is equipped and configured to receive from the system controller ones of the address range information, and, when so initiated, to perform a transfer of a portion of the digital data stream between a network data path and the connected storage devices at an address range as specified in the address range information. The system controller is configured to generate, while the bus driver units are performing a first transfer of a first portion of the digital data stream using a first address range information, a second address range information. The bus driver units are configured to receive the second address range information while they are performing the first transfer, and to use it for a next transfer when they have finished the first transfer and without waiting for the other bus driver units to complete the first transfer.

In an embodiment of the system, the system controller comprises a processor with a program memory, a bus driver control unit coupled to the processor and to the bus driver units, and an interface wrapper module that is configured to transfer packets of the digital data stream between the network data path and a network. The network data path comprises a buffer control unit coupled to the processor and coupled to an external buffer memory and equipped to use the external buffer memory to compensate latencies of the storage devices.

The bus driver units may be equipped to generate a first done signal when they have finished a transfer. The bus driver control unit may be configured, in response to receiving the first done signal from all of the bus drivers, to send a second done signal to the processor. The processor may be configured to perform the generation of the second address range information only after receiving the second done signal.

Another exemplary embodiment of the present invention provides a method to transfer a digital data stream. An address range to be used for a current transfer is determined. The address range information is provided to a plurality of bus driver units. Each bus driver unit is connected to one or more storage devices as connected storage devices and connected to a network data path. The bus driver units receive the address range information. The bus driver units, when so initiated, perform the current transfer of a portion of the digital data stream between the network data path and the connected storage devices at the address range as specified in the address range information. Providing the address range information and receiving the address range information are performed while the bus driver units are still performing a previous transfer. The address range is stored internally in the bus driver units.

Exemplary embodiments of the present invention are described with reference to the accompanying drawings. The described embodiments merely exemplify the invention. Plural possible modifications are apparent to the skilled person. The gist and scope of the present invention is defined in the appended claims of the present application.
Fig. 1 is a block diagram of a system for real-time streaming and storage, in accordance with an exemplary embodiment of the present invention.
Fig. 2 is a block diagram of a system for real-time streaming and storage, in accordance with exemplary embodiments of the present invention.
Fig. 3 is a message flow diagram of a method for real-time streaming and storage, in accordance with an exemplary embodiment of the present invention.
Figs. 4A-4B are block diagrams showing flush loops in a system for real-time streaming and storage, in accordance with an exemplary embodiment of the invention.

In accordance with an exemplary embodiment of the present invention, a method and a system is provided for real-time streaming and storage using an array of storage devices. The real-time streaming and storage may avoid interruption of data paths. The method involves autonomous operation of the individual storage devices. As such, no storage device waits for another device to finish a first transfer before beginning a second transfer. Additionally, the address range of the second transfer is communicated to the individual storage devices while the first transfer is ongoing. Accordingly, the storage devices do not wait for the address of the second transfer once the first transfer is complete.

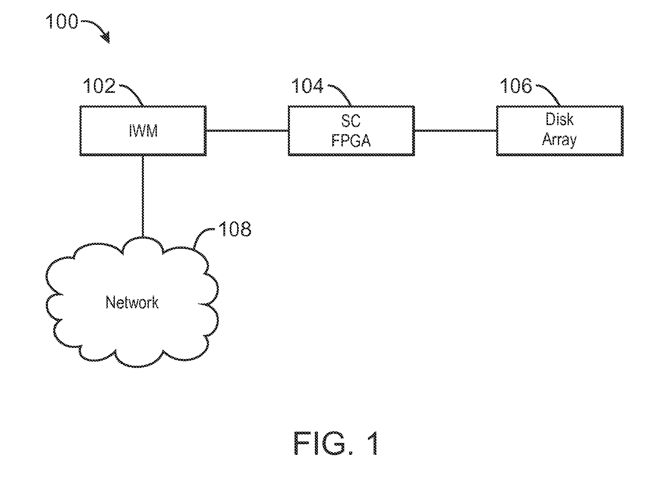

In accordance with an exemplary embodiment of the present invention, data may be streamed in real-time for playback to client devices on a network. Alternatively, data may be streamed from the network in real-time for storage. For example, Fig. 1 is a block diagram of a system 100 for real-time streaming and storage that may be used in exemplary embodiments of the invention.

One requirement for streaming of data, such as audio-visual data, is that of real-time. In real-time, streamed data may not be paused or repeated. To achieve both speed and flexibility, the system 100 offloads the computationally intensive but rather straight forward tasks of processing and moving streaming data to hardware logic. The system 100 performs the related file system management tasks in software modules executed by the CPU. This constellation, however, requires a close cooperation and synchronization between the hardware and software activities.

In an exemplary embodiment of the invention, the buffer capacity and microprocessor performance may be strongly limited. Advantageously, the system 100 may fill the gap between sustained streaming of data having real-time requirements and flexibility of conventional file system implementations. The system 100 may implement a real-time capable hardware architecture that divides the tasks to be done by hardware and software on the level of determining hardware modules, their interconnections, their functionalities and a necessary synchronization between hardware and software.

In Fig. 1, data may be streamed to or from the network 108. The system 100 includes an interface wrapper module 102, abbreviated IWM, herein, a system controller field programmable gate array 104, which may be referred to as a system controller herein, and a disk array 106.

The IWM 102 may be coupled, connected, or otherwise in communication with the system controller 104 over a data path and a control path. The data path may be used for data communications using the real time protocol, abbreviated RTP herein. The control path may be used for data communications using the real time streaming protocol, abbreviated RTSP herein.

The IWM 102 may provide the content of streaming data to be recorded on the disk array 106. The IWM 102 may also pass streaming AV data back from the disc array 106 to clients in network 108. In an exemplary embodiment of the invention, the IWM 102 may be configured on a single printed circuit board, abbreviated PCB herein. In such an embodiment, the separate PCB may provide the flexibility to change supported interfaces with the network 108 by swapping out the IWM 102.

The IWM 102 implemented on the interface board can be anything that does lower layer communication, such as UDP, TCP/IP, for example, and that forwards the payload of incoming packets from network to storage, here Ethernet packets, to either a data path or control path connected to the system controller 104.

The IWM 102 may have an internal packet parser that detects the upper layer protocol type of an incoming packet. Depending on the protocol type, that packet is then directed to either the data path or the control path. In an exemplary embodiment of the invention, packets with an upper layer protocol such as a Real Time Protocol, abbreviated RTP herein, are directed to the data path. Packets with a Real Time Streaming Protocol, abbreviated RTSP herein, may be directed to the control path.

The IWM 102 may also include a packetizer, not shown herein. The packetizer may take outgoing stream and control data from storage to network and wrap the content to a lower layer transport protocol. The wrapped packet may then be sent out to the network 108.

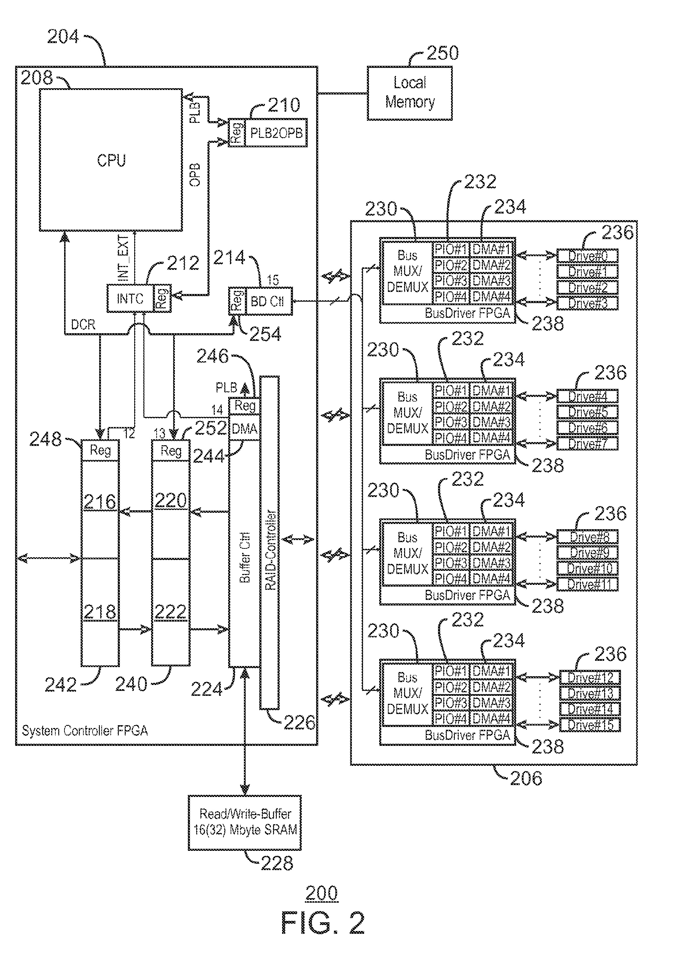

The system controller 104 is responsible for the main controlling and the real-time data processing tasks. The system controller 104 is described in greater detail with reference to Fig. 2.

The disk array 106 may include an array of local memory storage devices, such as hard drives or solid state disks. In another exemplary embodiment of the invention, the disk array 106 may be part of an embedded storage device. In such an implementation, the system 100 may also perform offline file transfer faster than real-time. Advantageously, the hardware partitioning of system 100 may facilitate adaption to different interfaces, streaming protocols, file systems and storage units with few changes to the system 100. The disk array 106 is described in greater detail with reference to Fig. 2.

Fig. 2 is a block diagram of a system 200 for real-time streaming and storage, in accordance with exemplary embodiments of the present invention. The system 200 includes a system controller 204 and a disk array 206.

The system 200 includes five field programmable gate array, abbreviated FPGA herein, devices: the system controller 204, and four bus driver FPGAs 238. The system 200 also includes a network data path. The network data path includes lanes connecting several hardware modules on the same or different FPGAs. In an exemplary embodiment of the invention, the components of the network data path are completely implemented and controlled by hardware.

The system controller 204 includes a CPU 208, PLB to OPB bridge 210, PLB20PB, an interrupt controller 212, INTC, a bus driver control 214, BD Ctl, a RTP/network file system, NFS, encoder 216, an RTP/NFS decoder 218, a read controller 220, a write controller 222, a buffer control 224, and a redundant array of independent disks controller, abbreviated RAID controller, 226.

The CPU 208 may be a standard microprocessor with conventional interrupt ports, and primary and secondary communication buses. The CPU 208 may be capable of running an operating system, or acting as a single task micro controller. The CPU 208 may operate at clock rates between 2-9 MHZ. In an exemplary embodiment of the invention, the CPU 208 may be a PowerPC CPU integrated into the system controller 204. In such an implementation, the communication buses may include PLB and DCR.

The CPU 208 may execute file system maintenance algorithms, communicate with network counterparts and interact with a user. In an exemplary embodiment of the invention, the user may initiate the real-time data streaming or storage.

The bus driver control 214 may transparently forward registers defined by each of the bus driver FPGAs 238 to the CPU 208, using a serial communication bus, such as I2C, not shown herein. Additionally, the bus driver control 214 may collect "done" interrupt signals from each of the bus driver FPGAs 238, read their status and error registers, and subsequently provide a completion signal and command execution status to the CPU 208.

The bus driver FPGAs 238 may provide a connection to an array of local memory storage devices 236. In an exemplary embodiment of the invention, the storage devices 236 may include hard drives or solid state disks with an ATA interface. Advantageously, by encapsulating the control of the storage devices 236 into the bus driver FPGAs, a change to new storage devices 236 with a different interface may only require a change of the bus driver FPGAs. In an exemplary embodiment of the invention, the system controller 204 and the bus driver FPGAs 238 may be placed on a single board.

The RAID controller 226 may be a real-time embedded RAID controller that multiplexes/de-multiplexes incoming/outgoing data streams and optionally adds redundancy. By adding redundancy, the RAID controller 226 may be able to restore recorded data in case one or more storage devices 236 fail. In an exemplary embodiment of the invention, the RAID controller 226 may work autonomously, eliminating the need for control registers.

The buffer controller 224 may be a hardware module with an extended control register set that operates with an external SRAM Buffer 228. The buffer controller 224 may also include a built in DMA engine 244 that copies data to/from a local memory 250 from/into the external SRAM buffer 228. In an exemplary embodiment of the invention, the local memory 250 may be a DDR SDRAM.

The DMA engine 244 may enable the CPU 208 to read and write single stripes of data from the local memory 250 to an array of storage devices 236 and back by partially using the data path. The function of the DMA engine 244 may be fully controllable by the CPU 208 through a register set 246. A stripe is a minimum amount of data readable from or writable to the array of storage devices 236. A stripe's data may be equally distributed to all the storage devices 236.

The write controller 222 may be a hardware module with an extended control register set 252 that guards the real-time data path for streaming direction from the IWM 102 to the local memory 250. The write controller 222 may enable the CPU 208 to start and stop a data recording, and to receive information about the data stream recorded to the local memory 250.

During real-time streaming for storage, the buffer controller 224 may forward the stream from the write controller 222 to the RAID controller 226. If the RAID controller 226 is busy, e.g., because the storage devices 236 are not ready to receive data, the buffer controller 224 may use the external SRAM Buffer 228 as intermediate storage to compensate for the latencies of the storage devices 236. In an exemplary embodiment of the invention, access to the external SRAM Buffer 228 is faster than real-time to facilitate emptying the external SRAM Buffer 228 during streaming while preventing an overflow of the external SRAM Buffer 228.

The read controller 220 may be a hardware module with an extended control register set 252. The read controller 220 is the counterpart to the write controller 222 when real-time data is transferred in the opposite direction from the local memory 250 to the IWM 102. The read controller 220 may also enable the CPU 208 to set up and control the data stream.

During real-time streaming for playback, the buffer controller 224 may forward the stream from the RAID controller 226 to the read controller 220. In an exemplary embodiment of the invention, the read controller 220 may be configured with the number of bytes to be streamed out. In such an embodiment, the playback may be stopped once the specified number of bytes has passed through the read controller 220.

Additionally, the read controller 220 may be configured with an offset parameter that defines the number of bytes to cut at the beginning of the playback stream. In this manner, it is possible to determine the start of the playback freely within the data stream.

The RTP/NFS decoder 218 may be a hardware module with an extended control register set 248 that decodes the RTP or NFS header of the incoming real-time or non real-time data.

The RTP/NFS decoder 218 may also write relevant decoded information into its extended control register set 248. In an exemplary embodiment of the invention, the CPU 208 may configure the RTP/NFS decoder 218 to forward the payload data of received RTP/NFS packets to the write controller 222.

The RTP/NFS encoder 216 may be a hardware module with an extended control register set 248 that builds RTP or NFS packets with the payload data received from the read controller 220. In an exemplary embodiment of the invention, the CPU 208 may configure the RTP/NFS encoder 216 to control the building of RTP or NFS packets. During playback of a data stream, the RTP/NFS encoder 216 may be configured with the RTP packet size, to generate desired RTP packets.

The bus driver FPGAs 238 may include a bus MUX/DEMUX module 230, a programmed input/output module 232, abbreviated PIO herein, and a DMA module 234. The bus MUX/DEMUX module 230 may be a hardware module that multiplexes/de-multiplexes the data stream and transfers it to/from the 1 to n storage devices 236 connected to the Bus Driver FPGA 238 using an appropriate interface protocol, e.g. parallel or serial ATA.

The PIO module 232 may be a hardware module that implements Programmed Input/Output mode. The PIO mode is a special mode of the ATA protocol for transferring commands or data to/from a storage device 236 connected through an ATA interface.

The DMA module 234 may be a hardware module that implements the "Direct Memory Access" mode. The DMA mode is a special mode of the ATA protocol for transferring an amount of data to/from a storage device 236 connected through an ATA interface. However, unlike PIO mode, DMA mode may not send a new command for each transferred data word.

In an exemplary embodiment of the invention, a SystemACE and compact flashcard, not shown, may be connected to the system controller 204. The SystemACE and Compact Flashcard may include configuration files for the system controller 204 and bus driver FPGAs 238 components. The SystemACE and compact flashcard may also include the control application for real-time streaming and storage. The configuration files and software application may be automatically downloaded during the power up sequence.

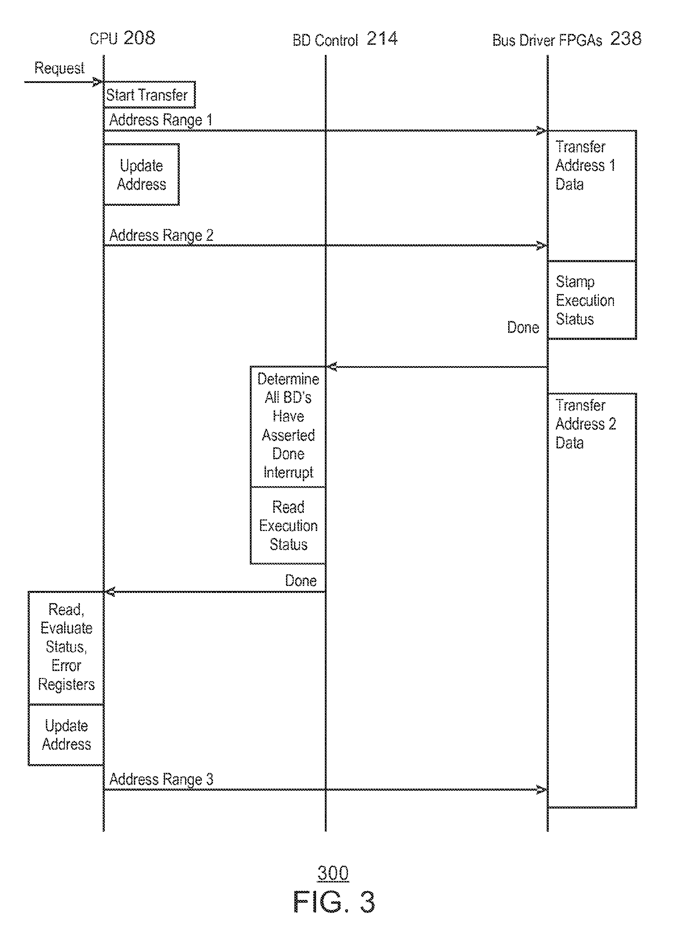

Fig. 3 is a message flow diagram of a method for real-time streaming and storage, in accordance with an exemplary embodiment of the present invention. At the beginning of a streaming, the CPU 208 may receive a request to start a streaming for playback/record. The request may be initiated from an input device either directly connected to the system controller 204, or from a client on the network 108.

In response to the request, the CPU 208 may invoke a "START TRANSFER" procedure. The "START TRANSFER" procedure may be a start_record in the case of recording streaming data. In such a case, the CPU 208 may allocate a free cluster, such as one cluster that contains one or more stripes, on the storage devices 236.

In the case of streaming data from the storage devices 236 to the network, the "START TRANSFER" procedure may be a start_play. In such a case, the CPU 208 may identify the first cluster on the storage devices 236 that will be used in the playback.

In the "START TRANSFER" procedure, the CPU 208 may call a driver function which configures all involved hardware modules for recording/playback. As soon as the hardware modules, e.g. RTP/NFS Decoder 218 and write controller 222 for start_record, are configured, the RTP/NFS Decoder 218 may wait for a first packet of a video frame to ensure a correct start of a stored video stream.

When a start packet is recognized, the packet and all further packets, such as the packet's payload without the RTP header, may be transferred to the write controller 222 until the hardware modules are stopped. In an exemplary embodiment of the invention, the write controller 222 may count the transferred bytes of the data stream.

The driver function may also communicate the address range of the first cluster, "ADDRESS RANGE 1" to the bus driver FPGAs 238. The bus driver FPGAs know nothing about clusters. As such, ADDRESS RANGE 1 may specify a starting sector and the number of sectors belonging to this cluster.

In an exemplary embodiment of the invention, the CPU 208 may communicate with the bus driver FPGAs 238 using the bus driver control 214. In such an embodiment, the CPU 208 may set a command for the bus driver FPGAs 238 into the register 254 of the bus driver control 214. The bus driver control 214 may forward the command to each of the bus driver FPGAs 238 using the "general call" feature of I2C. Upon receipt of the "ADDRESS RANGE 1," the bus driver FPGAs 238 may begin to transfer the data to/from "ADDRESS RANGE 1."

After completing the "START TRANSFER" procedure, the CPU 208 may perform an "UPDATE ADDRESS" procedure. The "UPDATE ADDRESS" procedure may identify the next cluster to be used in the data streaming. The CPU 208 may then communicate the "ADDRESS RANGE 2" to each of the bus driver FPGAs 238. As shown, the bus driver FPGAs 238 may receive "ADDRESS RANGE 2" before the transfer at "ADDRESS RANGE 1" completes.

When the transfer at "ADDRESS RANGE 1" completes, the bus driver FPGA 238 may stamp its execution status into corresponding registers. The bus driver FPGA 238 may then assert the "DONE" interrupt, and immediately proceed with the transfer at "ADDRESS RANGE 2."

The bus driver control 214 may wait until all drivers have asserted the "DONE" interrupt. The bus driver control 214 may then read the execution status and error registers from each of the bus driver FPGAs 238. The bus driver control 214 may map the execution statuses to internal registers and set the "BD DONE" interrupt for the CPU 208. In an exemplary embodiment of the invention, the "BD DONE" interrupt may first go to the interrupt controller 212, and then to the CPU 208.

Upon reception of the "BD DONE" interrupt, the CPU 208 may read the status and error registers corresponding to each of the bus driver FPGAs 238, and evaluate their content. The CPU 208 may then invoke the "UPDATE ADDRESS" procedure to supply the bus driver FPGAs 238 with the next cluster address, "ADDRESS RANGE 3." This sequence may be repeated until the control application invokes a procedure to stop streaming.

After the control application invokes the stop transfer procedure, all data is flushed from the network data path, and the hardware may be set into idle mode. In the case of recording the streaming data, the controller application determines the number of written bytes from the write controller 222, calculates the new file size, and synchronizes file system structures, such as FAT, file inode, to the storage devices 236. Since allocation of free clusters is done in advance the last allocated unit may remain unused and needs to be freed again in FAT by a file system manager, not shown herein.

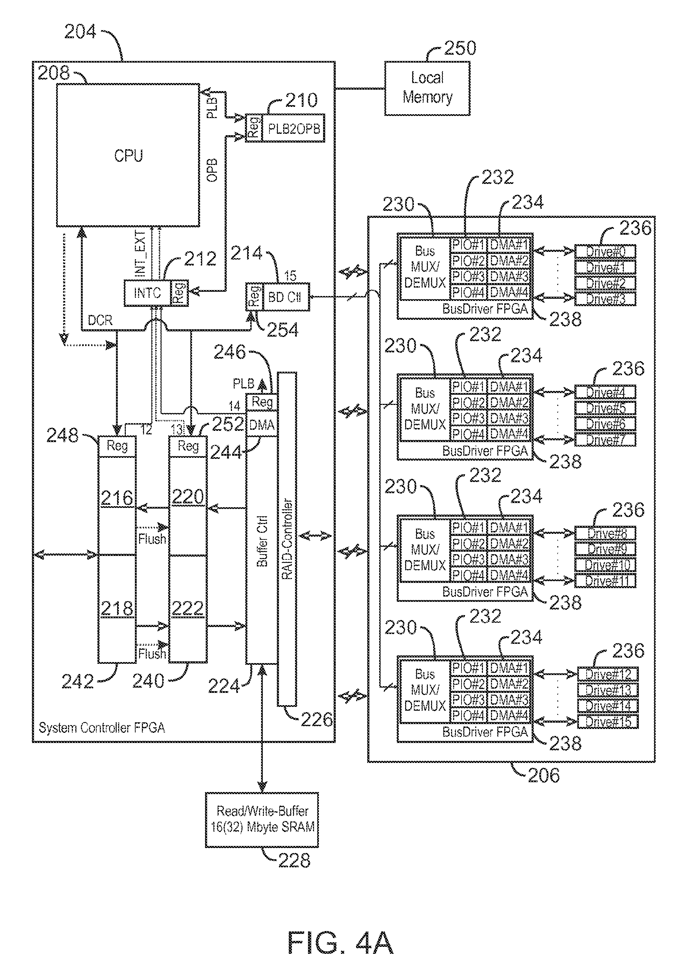

Figs. 4A-4B are block diagrams showing flush loops in a system for real-time streaming and storage, in accordance with an exemplary embodiment of the invention. The hardware modules on the system controller 204 and bus driver FPGAs 238, may implement two flush loops that allow the CPU 208 to initiate the flushing of pending data in internal buffers to the storage devices 236. The other purpose of flushing is to signal to all participated hardware modules that the current operation is done and the modules can switch to idle state with just a single command issued by the CPU 208.

Fig. 4A illustrates the interface flush loop, which spans the RTP/NFS Encoder 216, RTP/NFS Decoder 218, read controller 220, write controller 222, and the buffer controller 224. The CPU 208 may write a stop command in register 248 of the RTP/NFS Module 242. In response, all pending data in the RTP/NFS Module 242 may be flushed to the read controller 220, and the write controller 222.

In an exemplary embodiment of the invention, the RTP/NFS Module 242 may reset itself back to idle state depending on a type of the stop command. Upon completion, the flush signal may be returned to the CPU 208 with an interrupt from the buffer controller 224.

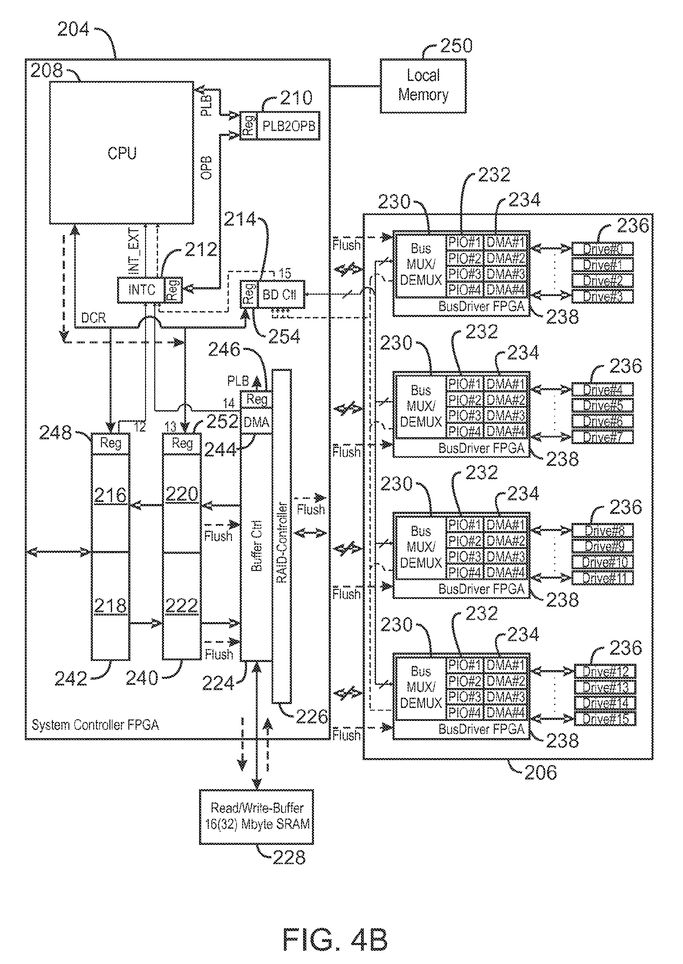

Fig. 4B illustrates the storage flush loop, in accordance with an exemplary embodiment of the invention. The storage flush loop may be performed at the end of any operation that involves access to disc drives, be it reading/writing of stripes, or stream recording/playback. The storage flush loop may be performed in a chained scheme: a flush command is sent by the CPU 208 to the buffer controller 224. In response, the buffer controller 224 may clean the external SRAM buffer 228, and all internal FIFOs and state machines, not shown.

The buffer controller 224 may also forwards the flush signal to each of the bus driver FPGAs 238, which may sync all flushed data to the storage devices 236. The bus driver FPGAs 238 may also clean up and assert the interrupts to the bus driver controller 214 to indicate that the hardware is done with flushing. After all the bus driver FPGAs 238 have asserted the interrupts, the bus driver controller 214 may forward a "BD DONE" interrupt to the CPU 208.

In an exemplary embodiment of the invention, all modules in the storage flush chain may be automatically reset to an idle state. Advantageously, the CPU 208 may stop an active streaming operation by writing the flush command to the appropriate register in buffer controller 224, and wait for the assertion of the "BD DONE" interrupt.

Advantageously, using two flush loops facilitates portability of hardware within the system controller 204. In the event of changes to the IWM 102, and/or protocol wrappers like the RTP/NFS Module 242, only modifications to the interface flush loop may be need. Such changes would not affect the storage flush loop.

The skilled person will appreciate that combining any of the above-recited features of the present invention together may be desirable.

## Claims

1. A system (100, 200) for transferring a digital data stream, comprising:
a system controller (104, 204) equipped and configured to generate address range information and to initiate data transfers;
an array (106) of storage devices (236); and
a plurality of bus driver units (238), each of which is connected to one or more of the storage devices (236) as connected storage devices (236), and is equipped and configured to receive from the system controller (104, 204) ones of the address range information, and, when so initiated, to perform a transfer of a portion of the digital data stream between a network data path and the connected storage devices (236) at an address range as specified in the address range information;
the system (100, 200) **characterized in that**:
the system controller (104, 204) is configured to generate, while the bus driver units (238) are performing a first transfer of a first portion of the digital data stream using a first address range information, a second address range information, and
the bus driver units (238) are configured to receive the second address range information while they are performing the first transfer, and to use it for a next transfer when they have finished the first transfer and without waiting for the other bus driver units (238) to complete the first transfer.

2. The system (100, 200) of claim 1, wherein the address range information are write address range information, and the transfer is a recording transfer from the network data path to the connected storage devices.

3. The system (100, 200) of claim 1, wherein the address range information are read address range information, and the transfer is a playback transfer from the connected storage devices to the network data path.

4. The system (100, 200) of any of claims 1-3, wherein the system controller comprises a processor with a program memory, a bus driver control unit coupled to the processor and to the bus driver units, and an interface wrapper module that is configured to transfer packets of the digital data stream between the network data path and a network; and wherein the network data path comprises a buffer control unit coupled to the processor and coupled to an external buffer memory and equipped to use the external buffer memory to compensate latencies of the storage devices.

5. The system (100, 200) of claim 4, wherein
the bus driver units are equipped to generate a first done signal when they have finished a transfer;
the bus driver control unit is configured, in response to receiving the first done signal from all of the bus drivers, to send a second done signal to the processor; and
the processor is configured to perform the generation of the second address range information only after receiving the second done signal.

6. A method for transferring a digital data stream, comprising:
to determine an address range information to be used for a current transfer,
to provide the address range information to a plurality of bus driver units (238) each connected to one or more storage devices (236) as connected storage devices (236) and connected to a network data path;
to receive, in the bus driver units (238), the address range information, and,
to perform, by the bus driver units (238) when so initiated, the current transfer of a portion of the digital data stream between the network data path and the connected storage devices (236) at the address range as specified in the address range information;
the method **characterized in that**
the steps of providing the address range information and receiving the address range information are performed while the bus driver units (238) are still performing a previous transfer; and
the address range information is stored internally in the bus driver units (238).

7. The method of claim 6, wherein the address range information is a write address range information, and the transfer is a recording transfer from the network data path to the connected storage devices.

8. The method of claim 6, wherein the address range information is a read address range information, and the transfer is a playback transfer from the connected storage devices to the network data path.

9. The method of any of claims 6-8, wherein, for transfers after a first transfer, the step of providing the address range information is performed only after all bus driver units have finished the previous transfer.
